# EUROPEAN PATENT APPLICATION

(11) **EP 4 254 006 A1**
(43) Date of publication of application: **04.10.2023**
(21) Application number: 21897740.3
(22) Date of filing: 11.11.2021
(51) Int. Cl.: G01S 13/87, G01S 13/34, G01S 13/931

(54) **ELECTRONIC DEVICE, METHOD FOR CONTROLLING ELECTRONIC DEVICE, AND PROGRAM**

(30) Priority: 27.11.2020 JP 2020197127
(71) Applicant: Kyocera Corporation, Kyoto-shi Kyoto 612-8501 (JP)
(72) Inventor: MURAKAMI Youhei, Kyoto-shi, Kyoto 612-8501 (JP); KAWAJI Satoshi, Kyoto-shi, Kyoto 612-8501 (JP); SATO Masayuki, Kyoto-shi, Kyoto 612-8501 (JP); NISHIKIDO Masamitsu, Kyoto-shi, Kyoto 612-8501 (JP)
(74) Representative: Viering, Jentschura & Partner mbB Patent- und Rechtsanwälte
(86) International application number: PCT/JP2021/041633
(87) International publication number: WO 2022/113766

(57) **Abstract**

An electronic device includes a first sensor and a second sensor. Each of the first sensor and the second sensor includes a transmission antenna, a reception antenna, and a controller. The transmission antenna transmits a transmission wave. The reception antenna receives a reflected wave that is the transmission wave having been reflected. The controller detects an object that reflects the transmission wave, based on a transmission signal transmitted as the transmission wave and a reception signal received as the reflected wave. The first sensor and the second sensor are disposed in respective directions that are not parallel to each other.

## Description

### CROSS-REFERENCE TO RELATED APPLICATIONS

This application claims priority from Japanese Patent Application No. 2020-197127 filed in Japan on November 27, 2020, the entire disclosure of which is incorporated herein by reference.

### TECHNICAL FIELD

The present disclosure relates to an electronic device, a method for controlling an electronic device, and a program.

### BACKGROUND OF INVENTION

For example, in fields such as automobile-related industries, a technology for measuring a distance or the like between a vehicle of interest and a predetermined object is regarded as important. Recently, various studies have been conducted particularly on a radar (Radio Detecting and Ranging) technology for measuring a distance or the like to an object such as an obstacle by transmitting a radio wave such as a millimeter wave and then receiving a reflected wave reflected off the object. Such a technology for measuring a distance or the like expectedly becomes more important in the future with progresses of a technology for assisting drivers in driving and an automated-driving-related technology for partially or entirely automating driving.

Various suggestions have been made on a technology for detecting the presence of an object by receiving a reflected wave of a radio wave that has been transmitted and reflected off the object. For example, studies have been conducted on a technology for detecting an object in a relatively wide range by a sensor transmitting a transmission wave and then receiving a reflected wave that arrives not only from a front direction of the sensor but also from a wider angle range. For example, Patent Literature 1 has suggested a radar device that detects an azimuth in a wide angle range.

### CITATION LIST

### PATENT LITERATURE

Patent Literature 1: Japanese Unexamined Patent Application Publication No. 2016-121959

### SUMMARY

In one embodiment, an electronic device includes a first sensor and a second sensor.

Each of the first sensor and the second sensor includes a transmission antenna, a reception antenna, and a controller.

The transmission antenna transmits a transmission wave.

The reception antenna receives a reflected wave that is the transmission wave having been reflected.

The controller detects an object that reflects the transmission wave, based on a transmission signal transmitted as the transmission wave and a reception signal received as the reflected wave.

The first sensor and the second sensor are disposed in respective directions that form a predetermined angle with respect to each other.

In one embodiment, a method for controlling an electronic device is
a method for controlling an electronic device including a first sensor and a second sensor disposed in respective directions that are not parallel to each other.

The method includes
at each of the first sensor and the second sensor,
transmitting a transmission wave with a transmission antenna,
receiving a reflected wave that is the transmission wave having been reflected, with a reception antenna, and
detecting an object that reflects the transmission wave, based on a transmission signal transmitted as the transmission wave and a reception signal received as the reflected wave.

In one embodiment, a program causes
an electronic device including a first sensor and a second sensor disposed in respective directions that are not parallel to each other to,
at each of the first sensor and the second sensor,
transmit a transmission wave with a transmission antenna,
receive a reflected wave that is the transmission wave having been reflected, with a reception antenna, and
detect an object that reflects the transmission wave, based on a transmission signal transmitted as the transmission wave and a reception signal received as the reflected wave.

### BRIEF DESCRIPTION OF THE DRAWINGS

FIG. 1 is a diagram for describing how a sensor according to one embodiment is used.
FIG. 2 is a diagram for describing characteristics of the sensor according to the one embodiment.
FIG. 3 is a diagram schematically illustrating an appearance of an electronic device according to one embodiment.
FIG. 4 is a sectional view of the electronic device taken along line A-A' in FIG. 3.
FIG. 5 is a diagram for describing functions of the electronic device according to the one embodiment.
FIG. 6 is a functional block diagram schematically illustrating a configuration of the electronic device according to the one embodiment.
FIG. 7 is a functional block diagram illustrating in detail a part of the configuration of the electronic device illustrated in FIG. 6.
FIG. 8 is a diagram for describing a variation of the electronic device according to the one embodiment.

### DESCRIPTION OF EMBODIMENTS

A technology for detecting an object by receiving a reflected wave that is a transmitted transmission wave reflected off the object desirably enables object detection with a good accuracy in a wide range. The present disclosure provides an electronic device, a method for controlling an electronic device, and a program that enable object detection with a good accuracy in a wide range. One embodiment can provide an electronic device, a method for controlling an electronic device, and a program that enable object detection with a good accuracy in a wide range. One embodiment is described in detail below with reference to the drawings.

An electronic device according to one embodiment is mounted in a vehicle (mobility device) such as an automobile, for example, and is capable of detecting, as a target, a predetermined object located around the mobility device. To this end, the electronic device according to the one embodiment is capable of transmitting a transmission wave to an area around the mobility device from a transmission antenna installed on or in the mobility device. The electronic device according to the one embodiment is also capable of receiving a reflected wave that is the reflected transmission wave, from a reception antenna installed on or in the mobility device. For example, a radar sensor or the like installed on or in the mobility device may include at least one of the transmission antenna or the reception antenna.

A typical configuration example is described below in which the electronic device according to the one embodiment is mounted in an automobile such as a passenger car. However, the mobility device in which the electronic device according to the one embodiment is mounted is not limited to an automobile. The electronic device according to the one embodiment may be mounted in various mobility devices such as an autonomous car, a bus, a truck, a taxi, a motorcycle, a bicycle, a ship, an aircraft, a helicopter, agricultural machinery such as a tractor, a snowplow, a garbage truck, a police car, an ambulance, and a drone. The mobility device in which the electronic device according to the one embodiment is mounted is not necessarily limited to a mobility device that moves by its own motive power. For example, the mobility device in which the electronic device according to the one embodiment is mounted may be a trailer towed by a tractor. The electronic device according to the one embodiment is capable of measuring a distance or the like between a sensor and a predetermined object when at least one of the sensor or the object is movable. The electronic device according to the one embodiment is also capable of measuring a distance or the like between the sensor and the object even when both the sensor and the object are stationary. The automobile encompassed by the present disclosure is not limited by the overall length, the overall width, the overall height, the displacement, the seating capacity, the load, or the like. For example, the automobiles of the present disclosure include an automobile having a displacement greater than 660 cc and an automobile having a displacement equal to or less than 660 cc that is a so-called light automobile. The automobiles encompassed by the present disclosure also include an automobile that partially or entirely uses electricity as energy and uses a motor.

An example of how the sensor included in the electronic device according to the one embodiment detects an object is described.

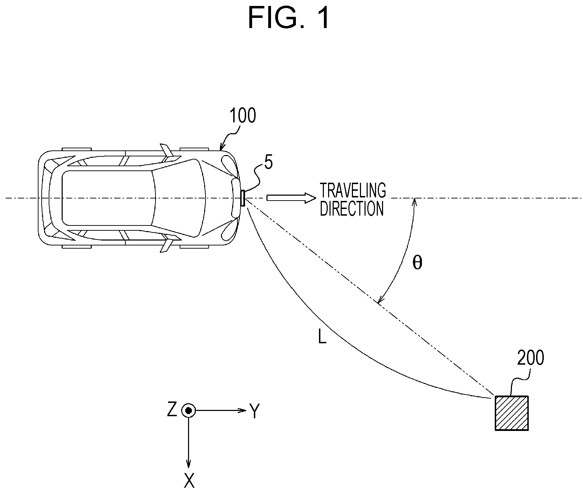

FIG. 1 is a diagram for describing how the sensor included in the electronic device according to the one embodiment is used. FIG. 1 illustrates an example in which a sensor, including a transmission antenna and a reception antenna, according to the one embodiment is installed on a mobility device.

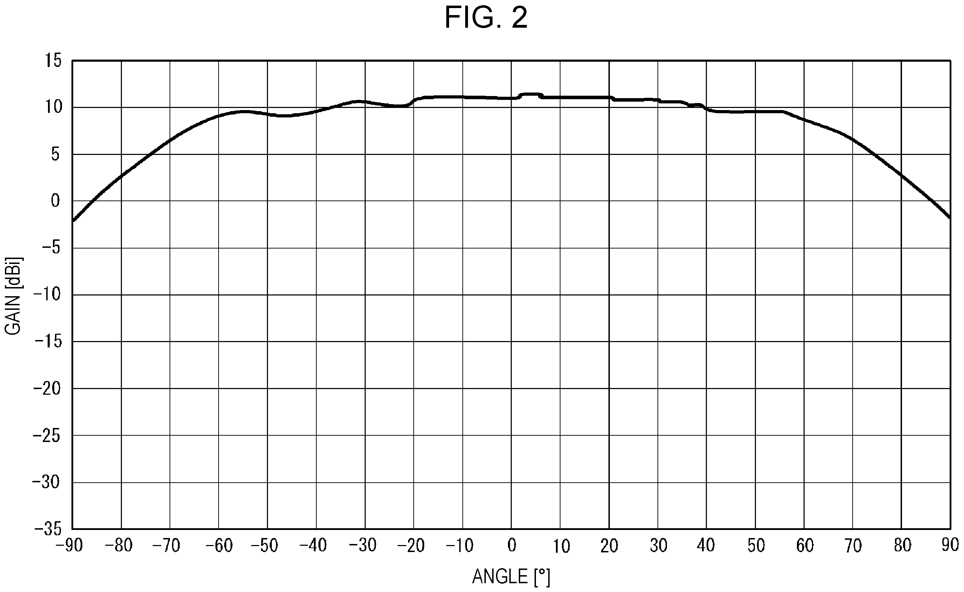

A mobility device 100 illustrated in FIG. 1 includes a sensor 5 according to the one embodiment installed thereon. The sensor 5 includes a transmission antenna and a reception antenna. The mobility device 100 illustrated in FIG. 1 includes an electronic device 1 according to the one embodiment mounted (for example, built) therein. A specific configuration of the electronic device 1 is described later. The sensor 5 may include at least eleven transmission antennas and at least eleven reception antennas, for example. The sensor 5 may appropriately include at least any of other functional units, such as at least part of a controller 10 (FIG. 2) included in the electronic device 1. The mobility device 100 illustrated in FIG. 1 may be an automotive vehicle such as a passenger car but may be a mobility device of any type. In FIG. 1, the mobility device 100 may move (travel or slowly travel), for example, in a positive Y-axis direction (traveling direction) illustrated in FIG. 1 or in another direction, or may be stationary without moving.

The sensor 5 including the transmission antenna is installed on the mobility device 100 illustrated in FIG. 1. In the example illustrated in FIG. 1, only one sensor 5 including the transmission antenna and the reception antenna is installed at a front portion of the mobility device 100. The position where the sensor 5 is installed on the mobility device 100 is not limited to the position illustrated in FIG. 1 and may be another appropriate position. For example, the sensor 5 illustrated in FIG. 1 may be installed on a left side, on a right side, and/or at a rear portion of the mobility device 100. The number of such sensors 5 may be any number equal to or greater than 1 depending on various conditions (or requirements) such as a range and/or an accuracy of measurement performed at the mobility device 100. The sensor 5 may be installed inside the mobility device 100. The inside the mobility device 100 may be, for example, a space inside a bumper, a space inside a body, a space inside a headlight, or a space such as a vehicle cabin or a driver's space.

The sensor 5 transmits an electromagnetic wave as a transmission wave from the transmission antenna. For example, when a predetermined object (for example, an object 200 illustrated in FIG. 1) is located around the mobility device 100, at least part of the transmission wave transmitted from the sensor 5 is reflected off the object to become a reflected wave. For example, the reception antenna of the sensor 5 receives such a reflected wave. In this manner, the electronic device 1 mounted in the mobility device 100 can detect the object as a target.

The sensor 5 including the transmission antenna may be typically a radar (Radio Detecting and Ranging) sensor that transmits and receives a radio wave. However, the sensor 5 is not limited to a radar sensor. The sensor 5 according to the one embodiment may be, for example, a sensor based on the LIDAR (Light Detection and Ranging, Laser Imaging Detection and Ranging) technology that uses an optical wave. Since the technologies such as the radar and the LIDAR are already known, detailed description may be appropriately simplified or omitted.

The electronic device 1 mounted in the mobility device 100 illustrated in FIG. 1 receives, from the reception antenna, the reflected wave of the transmission wave transmitted from the transmission antenna of the sensor 5. In this manner, the electronic device 1 can detect, as the target, the predetermined object 200 located within a predetermined distance from the mobility device 100. For example, as illustrated in FIG. 1, the electronic device 1 can measure a distance L between the mobility device 100, which is a vehicle of interest, and the predetermined object 200. The electronic device 1 can also measure a relative velocity between the mobility device 100, which is the vehicle of interest, and the predetermined object 200. The electronic device 1 can further measure a direction (an angle of arrival θ) from which the reflected wave from the predetermined object 200 arrives at the mobility device 100, which is the vehicle of interest.

The object 200 may be, for example, at least any of an oncoming automobile traveling in a lane adjacent to a lane of the mobility device 100, an automobile traveling next to the mobility device 100, an automobile traveling in front of or behind the mobility device 100 in the same lane, and the like. The object 200 may also be any object located around the mobility device 100, such as a motorcycle, a bicycle, a stroller, a person such as a pedestrian, an animal, other forms of life such as an insect, a guardrail, a median strip, a road sign, a step on a sidewalk, a wall, a maintenance hole, or an obstacle. The object 200 may be in motion or stationary. For example, the object 200 may be an automobile or the like that is parked or stationary around the mobility device 100. In the present disclosure, the object detected by the sensor 5 includes a living thing such as a person or an animal in addition to a non-living thing. The object detected by the sensor 5 in the present disclosure includes a target, which includes a person, an object, and an animal, to be detected with the radar technology.

In FIG. 1, a ratio between a size of the sensor 5 and a size of the mobility device 100 does not necessarily indicate an actual ratio. FIG. 1 illustrates the sensor 5 that is installed at an outer portion of the mobility device 100. However, in one embodiment, the sensor 5 may be installed at various positions of the mobility device 100. For example, in one embodiment, the sensor 5 may be installed inside a bumper of the mobility device 100 so as not to be seen in the appearance of the mobility device 100.

Atypical example is described below in which the transmission antenna of the sensor 5 transmits a radio wave in a frequency band, such as a millimeter wave (equal to or higher than 30 GHz) or a quasi-millimeter wave (for example, around 20 GHz to 30 GHz). For example, the transmission antenna of the sensor 5 may transmit a radio wave having a frequency bandwidth of 4 GHz such as from 77 GHz to 81 GHz. For example, the transmission antenna of the sensor 5 may transmit a radio wave having a frequency bandwidth from 57 GHz to 64 GHz, from 76 GHz to 77 GHz, from 134 GHz to 141 GHz, or the like.

As described later, the sensor 5 includes a transmission antenna that transmits a transmission wave, and a reception antenna that receives a reflected wave. As described later, the sensor 5 may include multiple transmission antennas and multiple reception antennas (for example, a patch antenna). As illustrated in FIG. 1, hereinafter, a direction at an angle θ of 0° with respect to the sensor 5, for example, is also referred to as a "front direction of a sensor". The front direction of the sensor may be, for example, a direction perpendicular to a surface on which the multiple antennas are disposed in the sensor.

FIG. 2 is a graph illustrating an example of radio field intensity obtained when a device such as the sensor 5 illustrated in FIG. 1 transmits transmission waves at various angles and receives reflected waves. The horizontal axis illustrated in FIG. 2 may correspond to the angle θ (unit: [°]) illustrated in FIG. 1. The vertical axis illustrated in FIG. 2 denotes a gain (absolute gain) (unit: [dBi]). FIG. 2 illustrates the radio field intensity obtained when the sensor 5 receives a reflected wave of a transmission wave transmitted in the direction of the angle θ denoted by the horizontal axis.

As illustrated in FIG. 2, reception intensity of the reflected wave decreases in regions where the angle from the front direction (angle of 0°) of the sensor is large. In particular, the reception intensity of the reflected wave markedly decreases in a region in which the angle is equal to or larger than 60° and a region in which the angle is equal to or smaller than -60°. This is because a phase difference between the antenna elements usually decreases for an incoming wave that comes from a wide angle range in which the angle with respect to the front direction of the sensor is large. As described above, the reception intensity of the incoming wave in a wide angle range decreases in object azimuth detection based on a common radar technology. Thus, an object detection accuracy in the wide angle range decreases. Patent Literature 1 mentioned above makes a suggestion for coping with such an issue. However, the reception intensity of the reflected wave markedly decreases at an angle equal to or greater than 180° in the horizontal direction (that is, the angle is equal to or greater than 90° or equal to or smaller than -90° in FIGs. 1 and 2). This is inevitable in a configuration in which the antennas are disposed on a plane. In particular, when the antennas are installed on a plane, a gain of the antennas decreases. Thus, the object detection accuracy may decrease in the wide angle range. To cope with the issue described above, multiple antennas are disposed on multiple planes that do not constitute the same plane in the electronic device according to the one embodiment.

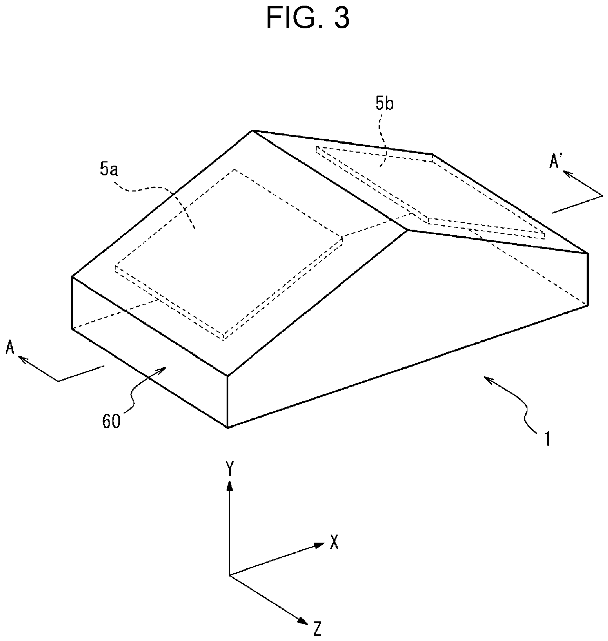

FIG. 3 is a diagram illustrating an appearance of the electronic device according to the one embodiment.

As illustrated in FIG. 3, a cover member 60 may cover at least a portion of the electronic device 1 according to the one embodiment in appearance. For example, the cover member 60 may cover the entire appearance of the electronic device 1 illustrated in FIG. 3 except for a bottom surface portion that is parallel to an X-Z plane. In one embodiment, the cover member 60 may cover the entire appearance of the electronic device 1 including the bottom surface portion that is parallel to the X-Z plane. An X axis, a Y axis, and a Z axis illustrated in FIG. 3 may represent the same directions as the X axis, the Y axis, and the Z axis illustrated in FIG. 1, respectively.

The cover member 60 may be made of, for example, a resin. The cover member 60 may be made of a material through which a transmission wave transmitted by the electronic device 1 and a reflected wave received by the electronic device 1 pass. The cover member 60 may be made of a material having a predetermined dielectric constant. The cover member 60 may constitute a housing of the electronic device 1 or may constitute a radome of the electronic device 1.

The electronic device 1 illustrated in FIG. 3 includes a first sensor 5a and a second sensor 5b inside the cover member 60. Thus, the first sensor 5a and the second sensor 5b are denoted by broken lines in FIG. 3. The cover member 60 may be made of a material having a predetermined rigidity to have a function of protecting the first sensor 5a and the second sensor 5b located inside the cover member 60 from an external impact, for example. The first sensor 5a may be the same as and/or similar to the sensor 5 illustrated in FIGs. 1 and/or 2. The second sensor 5b may be the same as and/or similar to the sensor 5 illustrated in FIGs. 1 and/or 2. The first sensor 5a and the second sensor 5b may have specifications at least part of which is the same or may have specifications at least part of which is different. When the first sensor 5a and the second sensor 5b are not distinguished from each other, the first sensor 5a and the second sensor 5b are simply referred to as "sensors 5".

The sensor 5 may be a quadrilateral plate-like member as illustrated in FIG. 3, or may have another shape. The sensor 5 includes the transmission antenna and the reception antenna. The sensor 5 can detect an object located around the electronic device 1, based on a transmission wave transmitted from the transmission antenna and a reception wave received from the reception antenna. A more detailed configuration of the sensor 5 is further described later.

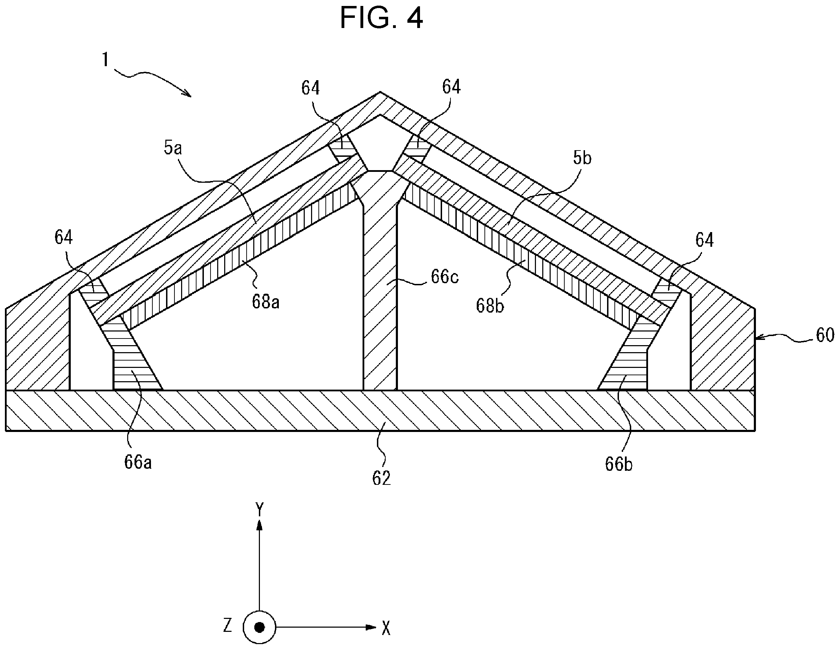

FIG. 4 is a sectional view of the electronic device 1 taken along line A-A' in FIG. 3. An X axis, a Y axis, and a Z axis illustrated in FIG. 4 may represent the same directions as the X axis, the Y axis, and the Z axis illustrated in FIG. 3, respectively.

As illustrated in FIG. 4, the electronic device 1 includes the first sensor 5a and the second sensor 5b inside the cover member 60. As illustrated in FIG. 4, the electronic device 1 may include, for example, a cover bottom surface portion 62 as a member different from the cover member 60. In this case, the cover bottom surface portion 62 may constitute the bottom surface portion parallel to the X-Z plane of the electronic device 1. In one embodiment, the electronic device 1 may include the cover member 60 including the cover bottom surface portion 62 (or integrated with the cover bottom surface portion 62). The cover bottom surface portion 62 may be made of, for example, a resin, or may be made of a metal plate, a predetermined substrate, or the like.

As illustrated in FIG. 4, the electronic device 1 may include spacers 64 between inside of the cover member 60 and the first sensor 5a and between inside of the cover member 60 and the second sensor 5b. As illustrated in FIG. 4, the multiple spacers 64 having substantially the same thicknesses enable a space between the cover member 60 and the first sensor 5a and the second sensor 5b to be maintained to be a predetermined space.

For example, supports 66a and 66c may support the first sensor 5a. Likewise, for example, supports 66b and 66c may support the second sensor 5b. Each of the supports 66a, 66b, and 66c may be made of a material that is rigid enough to support the first sensor 5a and the second sensor 5b, such as a resin or a metal, for example. When the height of the support 66a (dimension in the Y-axis direction) is set different from the height of the support 66c (dimension in the Y-axis direction), the first sensor 5a is supported with inclined at a predetermined angle with respect to the cover bottom surface portion 62. Likewise, when the height of the support 66b (dimension in the Y-axis direction) is set different from the height of the support 66c (dimension in the Y-axis direction), the second sensor 5b is supported with inclined at a predetermined angle with respect to the cover bottom surface portion 62. When the height of the support 66a (dimension in the Y-axis direction) is set equal to the height of the support 66b (dimension in the Y-axis direction), the first sensor 5a and the second sensor 5b are symmetrically supported with inclined at the same angle.

The configuration has been described in which the supports 66a, 66b, and 66c support the first sensor 5a and the second sensor 5b. The configuration of the electronic device 1 according to the one embodiment is not limited to such a configuration. For example, a support plate 68a may support the first sensor 5a inside the cover member 60. In this case, the supports 66a and 66c may support the support plate 68a. Likewise, a support plate 68b may support the second sensor 5b inside the cover member 60. In this case, the supports 66b and 66c may support the support plate 68b.

As illustrated in FIG. 4, the first sensor 5a and the second sensor 5b may be disposed on different inclined surfaces adjacent to each other, for example. That is, the first sensor 5a may be disposed on a first inclined surface (the support plate 68a), and the second sensor 5b may be disposed on a second inclined surface (the support plate 68b) different from the first inclined surface (the support plate 68a). In this case, as illustrated in FIG. 4, the support plate 68a and the support plate 68b may form two inclined surfaces that share, as a common ridgeline, a portion supported by the support 66c, for example. As described above, the surface (the support plate 68a) on which the first sensor 5a is disposed and the surface (the support plate 68b) on which the second sensor 5b is disposed may form two inclined surfaces having a common ridgeline. As illustrated in FIG. 4, the first sensor 5a and the second sensor 5b may be disposed in proximity to each other. Each of the surface (the support plate 68a) on which the first sensor 5a is disposed and the surface (the support plate 68b) on which the second sensor 5b is disposed may be covered with the cover member 60 that is parallel to the surface (68a, 68b).

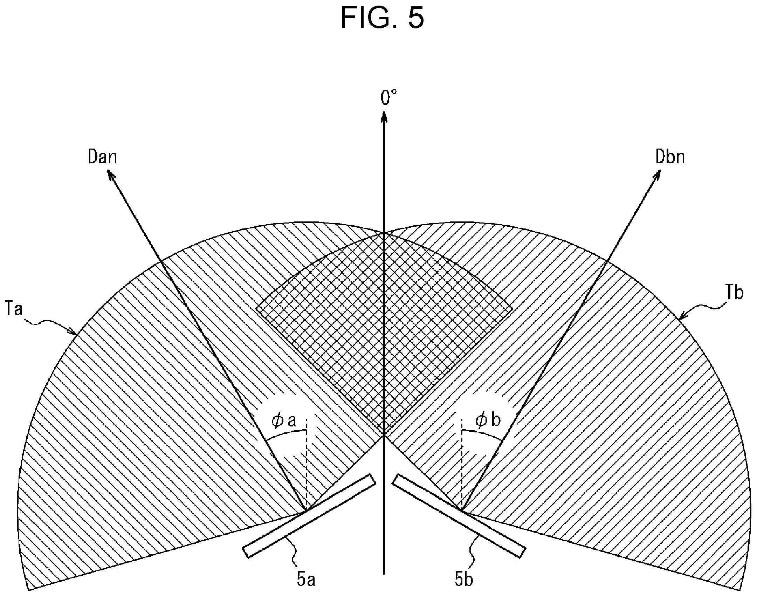

FIG. 5 is a diagram illustrating an arrangement example of the first sensor 5a and the second sensor 5b in the electronic device 1 according to the one embodiment. FIG. 5 illustrates the arrangement of the first sensor 5a and the second sensor 5b alone among the members illustrated in FIG. 4. That is, the first sensor 5a and the second sensor 5b illustrated in FIG. 5 present the arrangement of the first sensor 5a and the second sensor 5b illustrated in FIG. 4. Hereinafter, the positive Y-axis direction illustrated in FIG. 4 is also referred to as a "front direction of the electronic device 1". That is, the front direction of the electronic device 1 refers to a direction of an angle 0° illustrated in FIG. 5.

In FIG. 5, a direction Dan indicates the front direction of the first sensor 5a, and a direction Dbn indicates the front direction of the second sensor 5b. As described above, the front direction of the sensor 5 may be a direction perpendicular to a surface on which the multiple antennas are disposed in the sensor 5.

As illustrated in FIG. 5, the front direction Dan of the first sensor 5a is a direction rotated counterclockwise by an angle ϕa from the front direction (direction of angle 0°) of the electronic device 1. That is, the angle formed by the front direction Dan of the first sensor 5a and the front direction of the electronic device 1 (direction of the angle 0°) is ϕa. As illustrated in FIG. 5, the front direction Dbn of the second sensor 5b is a direction rotated clockwise by an angle ϕb from the front direction (direction of angle 0°) of the electronic device 1. That is, the angle formed by the front direction Dbn of the second sensor 5b and the front direction of the electronic device 1 (direction of the angle 0°) is cpb. In the electronic device 1 according to the one embodiment, the angle ϕa and the angle ϕb may be the same or different. At least one of the angle ϕa or the angle ϕb may be set to any angle such as 30°, for example.

As illustrated in FIG. 5, the first sensor 5a and the second sensor 5b are disposed on two surfaces that are not in the same plane, and thus face different directions from each other. In this manner, the first sensor 5a and the second sensor 5b may be disposed in respective directions that are not parallel to each other. That is, the first sensor 5a and the second sensor 5b may be disposed in respective directions that form a predetermined angle (for example, cpa + cpb illustrated in FIG. 5) with respect to each other.

A range in which the electronic device 1 according to the one embodiment can detect an object is described.

As illustrated in FIG. 5, an angle range in which the first sensor 5a can detect an object is a range Ta, for example. An angle range in which the second sensor 5b can detect an object is a range Tb, for example. In FIG. 5, the sizes of the first sensor 5a and the second sensor 5b and the sizes of the range Ta and the range Tb do not necessarily indicate actual ratios. The shapes of the first sensor 5a and the second sensor 5b and the shapes of the range Ta and the range Tb are not limited to those illustrated in FIG. 5.

As illustrated in FIG. 5, the angle range Ta in which the first sensor 5a can detect an object is smaller than 180°. Likewise, the angle range Tb in which the second sensor 5b can detect an object is smaller than 180°. As described above, in a region where the angle from the front direction of the sensor (direction Dan or direction Dbn) is large, the reception intensity of the reflected wave decreases. Thus, the object detection accuracy decreases in a wide angle range. That is, the object detection accuracy of the first sensor 5a decreases around the angle of ±90° from the direction Dan. Likewise, the object detection accuracy of the second sensor 5b decreases around the angle of ±90° from the direction Dbn. However, the electronic device 1 according to the one embodiment includes the first sensor 5a and the second sensor 5b, and thus can use a combination of the range Ta and the range Tb as the angle range in which an object is detectable. Therefore, the electronic device 1 according to the one embodiment can have a range exceeding the 180° as the angle range in which an object is detectable.

As described above, in the electronic device 1 according to the one embodiment, the angle at which an object that reflects the transmission wave T is detectable may be made larger than 180° by the first sensor 5a and the second sensor 5b. The electronic device 1 according to the one embodiment can avoid a decrease in the object detection accuracy in a wide angle range in which the angle exceeds 180°. Thus, the electronic device 1 according to the one embodiment can detect an object with a good accuracy in a wide range. The electronic device 1 according to the one embodiment expectedly reduces a blind spot in object detection even if an installation position or the like is restricted when the electronic device 1 is installed in a mobility device, for example.

When the electronic device 1 including the first sensor 5a and the second sensor 5b illustrated in FIG. 5 transmits and/or receives radio waves having the same frequency at the same time, interference may occur in an overlapping portion of the ranges Ta and Tb. Thus, the electronic device 1 may control one or both of the first sensor 5a and the second sensor 5b such that radio waves having the same frequency are not transmitted and/or received at the same time in the overlapping portion of the ranges Ta and Tb.

For example, when the first sensor 5a and the second sensor 5b transmit radio waves having the same frequency, the electronic device 1 may control a direction of a beam of the transmission waves of at least one of the first sensor 5a and the second sensor 5b such that the overlapping portion of the ranges Ta and Tb narrows or is no longer exist. When the first sensor 5a and the second sensor 5b transmit radio waves toward the overlapping portion of the ranges Ta and Tb, the transmission waves may have different frequencies. This configuration allows detection results obtained by the first sensor 5a and the second sensor 5b to be superimposed in the overlapping portion of the ranges Ta and Tb. When the first sensor 5a and the second sensor 5b transmit radio waves toward the overlapping portion of the ranges Ta and Tb, the first sensor 5a and the second sensor 5b may transmit the radio waves such that the radio waves do not overlap spatially (in the Z-axis direction illustrated in FIG. 4). At least any of the above measures can avoid or reduce the interference of the radio waves in the overlapping portion of the ranges Ta and Tb.

The electronic device 1 according to the one embodiment is further described in view of functions and/or operations.

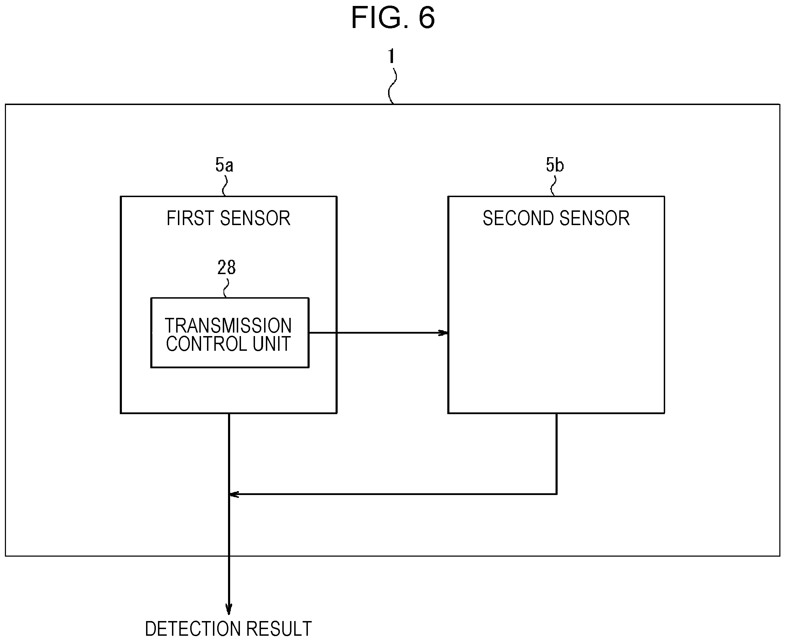

FIG. 6 is a functional block diagram schematically illustrating a configuration of the electronic device 1 according to the one embodiment.

As illustrated in FIG. 6, the electronic device 1 according to the one embodiment includes the first sensor 5a and the second sensor 5b. As illustrated FIG. 6, the first sensor 5a and the second sensor 5b may be electrically connected to each other. With such a connection, one sensor among the first sensor 5a and the second sensor 5b may control the other sensor in the electronic device 1 according to the one embodiment. For example, one of the first sensor 5a and the second sensor 5b may serve as a main sensor, and the other sensor may serve as a sub sensor. In this case, for example, the main sensor may control the operation of the sub sensor.

For example, as illustrated in FIG. 6, the first sensor 5a may include a transmission control unit 28. The transmission control unit 28 of the first sensor 5a may be electrically connected to the second sensor 5b. In this case, the transmission control unit 28 may control not only transmission of a transmission wave performed by the first sensor 5a but also transmission of a transmission wave performed by the second sensor 5b. That is, when the first sensor 5a controls transmission of a transmission wave performed by the second sensor 5b, the transmission control unit 28 included in the first sensor 5a may control the transmission of a transmission wave performed by the second sensor 5b. In this case, the transmission control unit 28 of the first sensor 5a may control, for example, a transmission timing of a transmission wave transmitted by the second sensor 5b. In this case, the transmission control unit 28 of the first sensor 5a may control, for example, the frequency of a transmission wave transmitted by the first sensor 5a and the frequency of a transmission wave transmitted by the second sensor 5b to be different from each other.

As described above, the first sensor 5a may control transmission of a transmission wave performed by the second sensor 5b in the electronic device 1 according to the one embodiment. The first sensor 5a may control a transmission timing of a transmission wave transmitted by the second sensor 5b in the electronic device 1 according to the one embodiment. The first sensor 5a may perform control for making the frequency of a transmission wave transmitted by the first sensor 5a and the frequency of a transmission wave transmitted by the second sensor 5b different from each other in the electronic device 1 according to the one embodiment. The first sensor 5a and the second sensor 5b may be controlled independently of each other in the electronic device 1 according to the one embodiment.

As illustrated in FIG. 6, an output of the detection result obtained by the first sensor 5a may be combined with an output of the detection result obtained by the second sensor 5b, and the combined detection result may be output to outside of the electronic device 1. For example, when the object detection result obtained by the electronic device 1 is output by CAN (Controller Area Network) communication, the output from the first sensor 5a and the output from the second sensor 5b may be distinguished from each other with identifiers (IDs), for example. Thus, even if the output of the detection result obtained by the first sensor 5a and the output of the detection result obtained by the second sensor 5b are collectively output to outside of the electronic device 1, the individual outputs can be identified later. In this case, the output of the detection result obtained by the first sensor 5a and the output of the detection result obtained by the second sensor 5b may be processed as if the outputs were an output from a single sensor included in the electronic device 1. The output of the detection result obtained by the first sensor 5a and the output of the detection result obtained by the second sensor 5b may be each subjected to predetermined correction as appropriate and then output from the electronic device 1. On the other hand, the output of the detection result obtained by the first sensor 5a and the output of the detection result obtained by the second sensor 5b may be output to outside of the electronic device 1 independently of each other.

The configuration of each of the first sensor 5a and the second sensor 5b is described in detail.

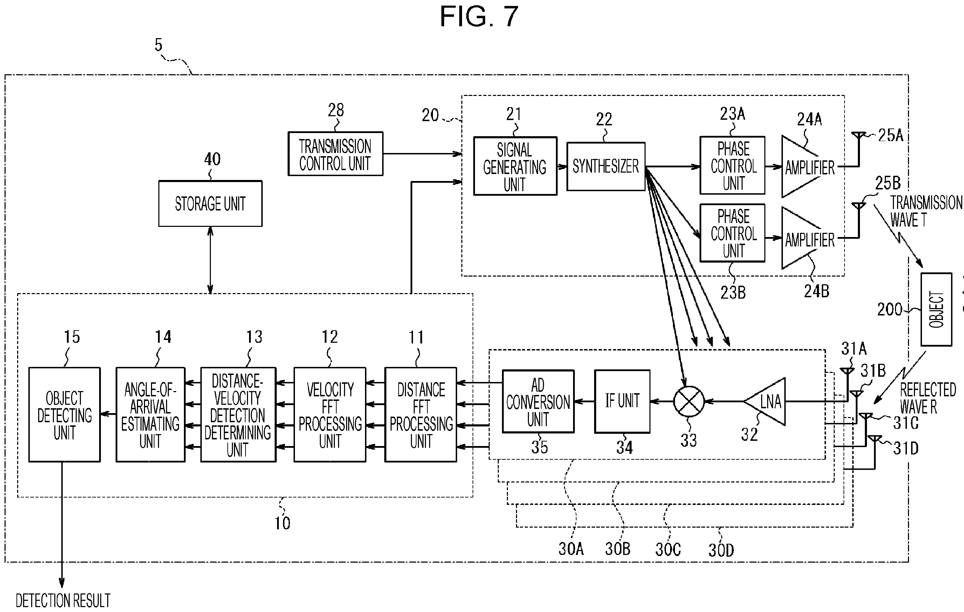

FIG. 7 is a functional block diagram illustrating the configuration of the sensor 5. FIG. 7 may illustrate the configuration of the first sensor 5a or the second sensor 5b, for example.

As described above, the first sensor 5a may include the transmission control unit 28 illustrated in FIG. 7. On the other hand, the second sensor 5b may include no transmission control unit 28 illustrated in FIG. 7. An example of the configuration of the sensor 5 of the electronic device 1 according to the one embodiment is described below.

When a distance or the like is measured by using a millimeter-wave radar, a frequency-modulated continuous wave radar (hereinafter, referred to as an FMCW radar) is often used. The FMCW radar sweeps a frequency of a to-be-transmitted radio wave to generate a transmission signal. Thus, a frequency of the radio wave used by such a millimeter-wave FMCW radar, which uses a radio wave of a frequency band of 79 GHz, for example, has a frequency bandwidth of 4 GHz such as from 77 GHz to 81 GHz, for example. The radar of the frequency band of 79 GHz has a feature that a usable frequency bandwidth is wider than other millimeter-wave and/or quasi-millimeter-wave radars of frequency bands of 24 GHz, 60 GHz, and 76 GHz, for example. Such an embodiment is described below as an example.

As illustrated in FIG. 7, the sensor 5 according to the one embodiment includes the controller 10. The sensor 5 according to the one embodiment may also appropriately include another functional unit such as at least any of a transmission unit 20, reception units 30A to 30D, or a storage unit 40. As illustrated in FIG. 7, the sensor 5 may include multiple reception units such as the reception units 30A to 30D. When the reception units 30A, 30B, 30C, and 30D are not distinguished from one another, the reception units 30A, 30B, 30C, and 30D are simply referred to as "reception units 30" below.

The controller 10 may include a distance FFT processing unit 11, a velocity FFT processing unit 12, a distance-velocity detection determining unit 13, an angle-of-arrival estimating unit 14, and an object detecting unit 15. These functional units included in the controller 10 are further described later.

As illustrated in FIG. 7, the transmission unit 20 may include a signal generating unit 21, a synthesizer 22, phase control units 23A and 23B, amplifiers 24A and 24B, and transmission antennas 25A and 25B. When the phase control units 23A and 23B are not distinguished from each other, the phase control units 23A and 23B are simply referred to as "phase control units 23" below. When the amplifiers 24A and 24B are not distinguished from each other, the amplifiers 24A and 24B are simply referred to as "amplifiers 24" below. When the transmission antennas 25A and 25B are not distinguished from each other, the transmission antennas 25A and 25B are simply referred to as "transmission antennas 25" below.

As illustrated in FIG. 7, each of the reception units 30 may include a respective one of reception antennas 31A to 31D. When the reception antennas 31A, 31B, 31C, and 31D are not distinguished from one another, the reception antennas 31A, 31B, 31C, and 31D are simply referred to as "reception antennas 31" below. As illustrated in FIG. 7, each of the multiple reception units 30 may include an LNA 32, a mixer 33, an IF unit 34, and an AD conversion unit 35. The reception units 30A to 30D may have the same and/or similar configuration. FIG. 7 schematically illustrates the configuration of only the reception unit 30A as a representative example.

The controller 10 included in the sensor 5 according to the one embodiment is capable of controlling the individual functional units of the sensor 5 and controlling operations of the entire sensor 5. To provide control and processing capabilities for executing various functions, the controller 10 may include at least one processor, for example, a CPU (Central Processing Unit) or a DSP (Digital Signal Processor). The controller 10 may be collectively implemented by one processor, may be implemented by some processors, or may be implemented by discrete individual processors. The processor may be implemented as one integrated circuit. The integrated circuit is also referred to as an IC. The processor may be implemented as multiple integrated circuits and discrete circuits connected to be able to perform communication. The processor may be implemented based on various other known technologies. In the one embodiment, the controller 10 may be configured as, for example, a CPU and a program executed by the CPU. The controller 10 may appropriately include a memory necessary for operations of the controller 10.

The storage unit 40 may store a program executed by the controller 10, results of processing performed by the controller 10, and so on. The storage unit 40 may function as a work memory of the controller 10. The storage unit 40 may include, for example, a semiconductor memory or a magnetic disk. However, the storage unit 40 is not limited to these, and can be any storage device. The storage unit 40 may be, for example, a storage medium such as a memory card inserted to the electronic device 1 according to the present embodiment. The storage unit 40 may be an internal memory of the CPU used as the controller 10 as described above.

In the one embodiment, the storage unit 40 may store various parameters for setting a range in which an object is detected based on a transmission wave T transmitted from each transmission antenna 25 and a reflected wave R received from each reception antenna 31.

In the sensor 5 according to the one embodiment, the controller 10 is capable of controlling at least one of the transmission unit 20 or the reception units 30. In this case, the controller 10 may control at least one of the transmission unit 20 or the reception units 30, based on various kinds of information stored in the storage unit 40. In the sensor 5 according to the one embodiment, the controller 10 may instruct the signal generating unit 21 to generate a signal or may control the signal generating unit 21 to generate a signal.

In accordance with control performed by the transmission control unit 28, the signal generating unit 21 generates a signal (transmission signal) to be transmitted as a transmission wave T from each of the transmission antennas 25. When generating a transmission signal, the signal generating unit 21 may allocate a frequency of the transmission signal in accordance with control performed by the transmission control unit 28, for example. Specifically, the signal generating unit 21 may allocate the frequency of the transmission signal in accordance with a parameter set by the transmission control unit 28, for example. For example, the signal generating unit 21 receives frequency information from the transmission control unit 28 or the storage unit 40 and generates a signal having a predetermined frequency in a frequency band such as from 77 GHz to 81 GHz, for example. The signal generating unit 21 may include a functional unit such as a voltage control oscillator (VCO), for example.

The signal generating unit 21 and/or the transmission control unit 28 may be configured as hardware having the function, for example as a microcomputer, or for example as a processor such as a CPU and a program or the like executed by the processor. Each functional unit described below may also be configured as hardware having the function, for example as a microcomputer if possible, or for example as a processor such as a CPU and a program or the like executed by the processor if possible.

In the sensor 5 according to the one embodiment, the signal generating unit 21 may generate a transmission signal (transmission chirp signal) such as a chirp signal, for example. In particular, the signal generating unit 21 may generate a signal (linear chirp signal) whose frequency changes linearly and periodically. For example, the signal generating unit 21 may generate a chirp signal whose frequency linearly and periodically increases from 77 GHz to 81 GHz as time elapses. For example, the signal generating unit 21 may generate a signal whose frequency periodically repeats a linear increase (up-chirp) from 77 GHz to 81 GHz and a decrease (down-chirp) as time elapses. For example, the controller 10 may set in advance the signal generated by the signal generating unit 21. For example, the storage unit 40 or the like may store in advance the signal generated by the signal generating unit 21. Since a chirp signal used in a technical field such as the radar is known, more detailed description is appropriately simplified or omitted. The signal generated by the signal generating unit 21 is supplied to the synthesizer 22.

The synthesizer 22 increases the frequency of the signal generated by the signal generating unit 21 to a frequency in a predetermined frequency band. The synthesizer 22 may increase the frequency of the signal generated by the signal generating unit 21 to a frequency selected as a frequency of the transmission wave T to be transmitted from each of the transmission antennas 25. For example, the controller 10 may set the frequency selected as the frequency of the transmission wave T to be transmitted from each of the transmission antennas 25. For example, the storage unit 40 may store the frequency selected as the frequency of the transmission wave T to be transmitted from each of the transmission antennas 25. The signal whose frequency has been increased by the synthesizer 22 is supplied to the phase control unit 23 and the mixer 33. When the multiple phase control units 23 are present, the signal whose frequency has been increased by the synthesizer 22 may be supplied to each of the multiple phase control units 23. When the multiple reception units 30 are present, the signal whose frequency has been increased by the synthesizer 22 may be supplied to the mixer 33 of each of the multiple reception units 30.

Each of the phase control units 23 controls a phase of the transmission signal supplied from the synthesizer 22. Specifically, for example, in accordance with control performed by the controller 10, each of the phase control units 23 may appropriately advance or delay the phase of the signal supplied from the synthesizer 22 to adjust the phase of the transmission signal. In this case, based on a difference between paths of the transmission waves T to be transmitted from the multiple transmission antennas 25, the phase control units 23 may adjust the phases of the respective transmission signals. The phase control units 23 appropriately adjust the phases of the respective transmission signals, so that the transmission waves T transmitted from the respective transmission antennas 25 enhance with each other in a predetermined direction to form a beam (beamforming). In this case, for example, the storage unit 40 may store a correlation between a direction of beamforming and amounts of phase by which the respective transmission signals transmitted by the respective transmission antennas 25 are to be controlled. The transmission signal whose phase is controlled by each of the phase control units 23 is supplied to a respective one of the amplifiers 24.

The amplifier 24 amplifies power (electric power) of the transmission signal supplied from the phase control unit 23 in accordance with control performed by the controller 10, for example. When the sensor 5 includes the multiple transmission antennas 25, each of the multiple amplifiers 24 may amplify power (electric power) of the transmission signal supplied from a respective one of the multiple phase control units 23 in accordance with control performed by the controller 10, for example. Since the technology for amplifying power of a transmission signal is already known, more detailed description is omitted. The amplifier 24 is connected to the transmission antenna 25.

The transmission antenna 25 outputs (transmits), as the transmission wave T, the transmission signal amplified by the amplifier 24. When the sensor 5 includes the multiple transmission antennas 25, each of the multiple transmission antennas 25 may output (transmit), as the transmission wave T, the transmission signal amplified by a respective one of the multiple amplifiers 24. Since the transmission antennas 25 can have a configuration that is the same as and/or similar to the configuration of transmission antennas for use in the known radar technology, more detailed description is omitted.

Accordingly, the sensor 5 according to the one embodiment, which includes the transmission antennas 25, can transmit transmission signals (for example, transmission chirp signals) as the transmission waves T from the respective transmission antennas 25. At least one of the functional units of the electronic device 1 may be housed in one housing. In this case, the one housing may have a hard-to-open structure. For example, the transmission antennas 25, the reception antennas 31, and the amplifiers 24 are desirably housed in one housing, and this housing desirably has a hard-to-open structure. When the sensor 5 is installed on the mobility device 100 such as an automobile, each of the transmission antennas 25 may transmit the transmission wave T to outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. Covering the transmission antennas 25 with a member such as the radar cover can reduce a risk of the transmission antennas 25 being damaged or malfunctioning because of a contact with an external object. The radar cover and the housing may also be referred to as a radome.

FIG. 7 illustrates an example of the sensor 5 that includes two transmission antennas 25. However, in one embodiment, the sensor 5 may include any number of transmission antennas 25. On the other hand, in one embodiment, the sensor 5 may include the multiple transmission antennas 25 when the transmission waves T transmitted from the respective transmission antennas 25 form a beam in a predetermined direction. In one embodiment, the sensor 5 may include multiple transmission antennas 25. In this case, the sensor 5 may include the multiple phase control units 23 and the multiple amplifiers 24 to correspond to the multiple transmission antennas 25. Each of the multiple phase control units 23 may control the phase of a respective one of the multiple transmission waves supplied from the synthesizer 22 and to be transmitted from the respective transmission antennas 25. Each of the multiple amplifiers 24 may amplify power of a respective one of the multiple transmission signals to be transmitted from the respective transmission antennas 25. As described above, when the sensor 5 illustrated FIG. 7 includes the multiple transmission antennas 25, the sensor 5 may include multiple functional units necessary for transmitting the transmission waves T from the multiple transmission antennas 25.

The reception antenna 31 receives the reflected wave R. The reflected wave R may be the transmission wave T reflected off the predetermined object 200. The reception antenna 31 may include multiple antennas such as the reception antennas 31A to 31D, for example. Since the reception antennas 31 can have a configuration that is the same as and/or similar to the configuration of reception antennas for use in the known radar technology, more detailed description is omitted. The reception antenna 31 is connected to the LNA 32. A reception signal based on the reflected wave R received by the reception antenna 31 is supplied to the LNA 32.

The sensor 5 according to the one embodiment can receive, from each of the multiple reception antennas 31, the reflected wave R that is the transmission wave T that has been transmitted as the transmission signal (transmission chirp signal) such as a chirp signal, for example, and has been reflected off the predetermined object 200. When the transmission chirp signal is transmitted as the transmission wave T in this manner, the reception signal based on the received reflected wave R is referred to as a reception chirp signal. That is, the sensor 5 receives the reception signal (for example, the reception chirp signal) as the reflected wave R from each of the reception antennas 31. When the sensor 5 is installed on the mobility device 100 such as an automobile, each of the reception antennas 31 may receive the reflected wave R from outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. Covering the reception antennas 31 with a member such as the radar cover can reduce a risk of the reception antennas 31 being damaged or malfunctioning because of a contact with an external object. The radar cover and the housing may also be referred to as a radome.

When the reception antenna 31 is installed near the transmission antenna 25, these reception antenna 31 and transmission antenna 25 may be collectively included in one sensor 5. That is, for example, one sensor 5 may include at least one transmission antenna 25 and at least one reception antenna 31. For example, one sensor 5 may include the multiple transmission antennas 25 and the multiple reception antennas 31. In such a case, one radar sensor may be covered with a cover member such as one radar cover, for example.

The LNA 32 amplifies, with low noise, the reception signal based on the reflected wave R received by the reception antenna 31. The LNA 32 may be a low-noise amplifier and amplifies, with low noise, the reception signal supplied from the reception antenna 31. The reception signal amplified by the LNA 32 is supplied to the mixer 33.

The mixer 33 mixes (multiplies) the reception signal having a radio frequency (RF) and supplied from the LNA 32 and the transmission signal supplied from the synthesizer 22 to generate a beat signal. The beat signal obtained by the mixer 33 through mixing is supplied to the IF unit 34.

The IF unit 34 performs frequency conversion on the beat signal supplied from the mixer 33 to decrease the frequency of the beat signal to an intermediate frequency (IF). The beat signal whose frequency has been decreased by the IF unit 34 is supplied to the AD conversion unit 35.

The AD conversion unit 35 digitizes the analog beat signal supplied from the IF unit 34. The AD conversion unit 35 may be configured as any analog-to-digital conversion circuit (Analog-to-Digital Converter (ADC)). The digitized beat signal obtained by the AD conversion unit 35 is supplied to the distance FFT processing unit 11 of the controller 10. When the multiple reception units 30 are present, the digitized beat signals obtained by the respective AD conversion units 35 may be supplied to the distance FFT processing unit 11.

The distance FFT processing unit 11 estimates a distance between the mobility device 100 equipped with the sensor 5 and the object 200, based on the beat signals supplied from the respective AD conversion units 35. The distance FFT processing unit 11 may include a processing unit that performs fast Fourier transform, for example. In this case, the distance FFT processing unit 11 may be configured as any circuit, any chip, or the like that performs fast Fourier transform (FFT).

The distance FFT processing unit 11 performs FFT processing (hereinafter, appropriately referred to as "distance FFT processing") on the digitized beat signals obtained by the AD conversion units 35. For example, the distance FFT processing unit 11 may perform FFT processing on complex signals supplied from the AD conversion units 35. The digitized beat signals obtained by the AD conversion units 35 can be represented as temporal changes in signal intensity (power). The distance FFT processing unit 11 performs FFT processing on such a beat signal, so that the beat signal can be represented as a signal intensity (power) for each frequency. If a peak in a result obtained by the distance FFT processing is equal to or greater than a predetermined threshold, the distance FFT processing unit 11 may determine that the predetermined object 200 is located at the distance corresponding to the peak. For example, in a known method such as constant false alarm rate (CFAR)-based detection processing, an object (reflecting object) that reflects a transmission wave is determined to be present if a peak value that is equal to or greater than a threshold is detected from the average power or amplitude of a disturbance signal.

As described above, the sensor 5 according to the one embodiment can detect, as the target, the object 200 that reflects the transmission wave T, based on the transmission signal transmitted as the transmission wave T and the reception signal received as the reflected wave R.

The distance FFT processing unit 11 can estimate a distance to the predetermined object, based on one chirp signal. That is, the electronic device 1 can measure (estimate) the distance L illustrated in FIG. 1 by performing the distance FFT processing. Since a technique for measuring (estimating) a distance to a predetermined object by performing FFT processing on a beat signal is known, more detailed description is appropriately simplified or omitted. The result of the distance FFT processing performed by the distance FFT processing unit 11 (for example, distance information) may be supplied to the velocity FFT processing unit 12. The result of the distance FFT processing performed by the distance FFT processing unit 11 may also be supplied to the distance-velocity detection determining unit 13, the object detecting unit 15, and/or the like.

The velocity FFT processing unit 12 estimates a relative velocity between the mobility device 100 equipped with the sensor 5 and the object 200, based on the beat signals on which the distance FFT processing has been performed by the distance FFT processing unit 11. The velocity FFT processing unit 12 may include a processing unit that performs fast Fourier transform, for example. In this case, the velocity FFT processing unit 12 may be configured as any circuit, any chip, or the like that performs fast Fourier transform (FFT).

The velocity FFT processing unit 12 further performs FFT processing (hereinafter, appropriately referred to as "velocity FFT processing") on the beat signals on which the distance FFT processing unit 11 has performed the distance FFT processing. For example, the velocity FFT processing unit 12 may perform FFT processing on the complex signals supplied from the distance FFT processing unit 11. The velocity FFT processing unit 12 can estimate a relative velocity of the predetermined object, based on a subframe including chirp signals. Through the distance FFT processing performed on the beat signals in the above-described manner, multiple vectors can be generated. The velocity FFT processing unit 12 can estimate a relative velocity of the predetermined object by determining a phase of a peak in a result of the velocity FFT processing performed on these multiple vectors. That is, the sensor 5 can measure (estimate) a relative velocity between the mobility device 100 and the predetermined object 200 illustrated in FIG. 1 by performing the velocity FFT processing. Since a technique for measuring (estimating) a relative velocity of a predetermined object by performing velocity FFT processing on a result of distance FFT processing is known, more detailed description is appropriately simplified or omitted. The result of the velocity FFT processing performed by the velocity FFT processing unit 12 (for example, velocity information) may be supplied to the angle-of-arrival estimating unit 14. The result of the velocity FFT processing performed by the velocity FFT processing unit 12 may also be supplied to the distance-velocity detection determining unit 13, the object detecting unit 15, and/or the like.

The distance-velocity detection determining unit 13 performs determination processing for a distance and/or a relative velocity, based on the result of the distance FFT processing performed by the distance FFT processing unit 11 and/or the result of the velocity FFT processing performed by the velocity FFT processing unit 12. The distance-velocity detection determining unit 13 determines whether the target is detected at a predetermined distance and/or a predetermined relative velocity.

The angle-of-arrival estimating unit 14 estimates a direction from which the reflected wave R arrives from the predetermined object 200, based on the result of the velocity FFT processing performed by the velocity FFT processing unit 12. The sensor 5 can estimate the direction from which the reflected wave R arrives, by receiving the reflected wave R from the multiple reception antennas 31. For example, the multiple reception antennas 31 are arranged at a predetermined interval. In this case, the transmission wave T transmitted from each of the transmission antennas 25 is reflected off the predetermined object 200 to become the reflected wave R. Each of the multiple reception antennas 31 arranged at the predetermined interval receives the reflected wave R. The angle-of-arrival estimating unit 14 can estimate the direction from which the reflected wave R arrives at each of the multiple reception antennas 31, based on the phase of the reflected wave R received by the reception antenna 31 and a difference in path of the reflected wave R. That is, the electronic device 1 can measure (estimate) the angle of arrival θ illustrated in FIG. 1, based on the result of the velocity FFT processing.

Various techniques for estimating a direction from which the reflected wave R arrives, based on a result of velocity FFT processing have been proposed. For example, MUSIC (Multiple Signal Classification), ESPRIT (Estimation of Signal Parameters via Rotational Invariance Technique), and the like are known direction-of-arrival estimation algorithms. Thus, more detailed description of the known techniques is appropriately simplified or omitted. Information (angle information) on the angle of arrival θ estimated by the angle-of-arrival estimating unit 14 may be supplied to the object detecting unit 15.

The object detecting unit 15 detects an object located in a range to which the transmission wave T is transmitted, based on the information supplied from at least any of the distance FFT processing unit 11, the velocity FFT processing unit 12, or the angle-of-arrival estimating unit 14. The object detecting unit 15 may perform detection of an object by performing, for example, clustering processing based on the supplied distance information, velocity information, and angle information. For example, DBSCAN (Density-based spatial clustering of applications with noise) or the like is a known algorithm used in clustering of data. In the clustering processing, for example, average power of points constituting the detected object may be calculated. The distance information, the velocity information, the angle information, and the power information of the object detected by the object detecting unit 15 may be supplied to an ECU (Electronic Control Unit) or the like, for example. In this case, when the mobility device 100 is an automobile, communication may be performed using a communication interface such as a CAN (Controller Area Network), for example.

The sensor 5 illustrated in FIG. 7 includes the two transmission antennas 25 and the four reception antennas 31. However, the sensor 5 according to the one embodiment may include any number of transmission antennas 25 and any number of reception antennas 31. For example, since the sensor 5 includes the two transmission antennas 25 and the four reception antennas 31, the sensor 5 can be considered to include a virtual antenna array virtually including eight antennas. As described above, the sensor 5 may receive the reflected wave R of, for example, 16 subframes by using, for example, the eight virtual antennas.

As described above, each of the first sensor 5a and the second sensor 5b according to the one embodiment may include the transmission antenna 25, the reception antenna 31, and the controller 10. The transmission antenna 25 transmits the transmission wave T. The reception antenna 31 receives the reflected wave R that is the transmission wave T having been reflected. The controller 10 detects an object that reflects the transmission wave T, based on a transmission signal transmitted as the transmission wave T and a reception signal received as the reflected wave R.

While the present disclosure has been described based on the various drawings and the embodiments, it is to be noted that a person skilled in the art can easily make various variations or corrections based on the present disclosure. Therefore, it is to be noted that these variations or corrections are within the scope of the present disclosure. For example, functions and the like included in each functional unit can be rearranged without causing any logical contradiction. Multiple functional units or the like may be combined into one or may be divided. The embodiments according to the present disclosure described above are not limited to strict implementation according to the respective embodiments described above, and may be implemented by appropriately combining the features or omitting part thereof. That is, a person skilled in the art can make various variations and corrections to the contents of the present disclosure based on the present disclosure. Therefore, these variations and corrections are within the scope of the present disclosure. For example, in each embodiment, each functional unit, each means, each step, or the like can be added to another embodiment or replaced with each functional unit, each means, each step, or the like in another embodiment without causing any logical contradiction. In each embodiment, multiple functional units, means, steps, or the like may be combined into one or may be divided. The embodiments of the present disclosure described above are not limited to strict implementation according to the respective embodiments described above, and may be implemented by appropriately combining the features or omitting part thereof.

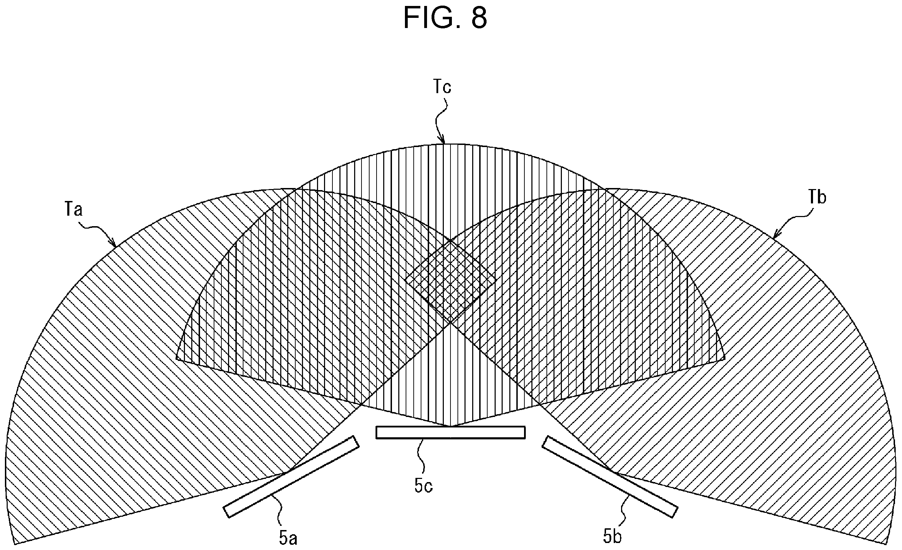

For example, the electronic device 1 according to the above-described embodiment includes the two sensors 5 (the first sensor 5a and the second sensor 5b). However, the electronic device 1 according to the one embodiment may include the three or more sensors 5. As illustrated in FIG. 8, the electronic device 1 according to the one embodiment may include the first sensor 5a, the second sensor 5b, and a third sensor 5c, for example. The electronic device according to such an embodiment can also avoid a decrease in the object detection accuracy in the wide angle range in which the angle exceeds 180°. Thus, the electronic device according to such an embodiment can detect an object with a good accuracy in a wide range. The electronic device according to such an embodiment expectedly reduces a blind spot in object detection even if an installation position or the like is restricted when the electronic device is installed in a mobility device, for example.

The embodiments described above are not limited to implementation as the electronic device 1. For example, the embodiments described above may be implemented as a method for controlling a device such as the electronic device 1. For example, the embodiments described above may be implemented as a program executed by a device such as the electronic device 1.

### REFERENCE SIGNS

- 1: electronic device
- 5: sensor
- 10: controller
- 11: distance FFT processing unit
- 12: velocity FFT processing unit
- 13: distance-velocity detection determining unit
- 14: angle-of-arrival estimating unit
- 15: object detecting unit
- 20: transmission unit
- 21: signal generating unit
- 22: synthesizer
- 23: phase control unit
- 24: amplifier
- 25: transmission antenna
- 28: transmission control unit
- 30: reception unit
- 31: reception antenna
- 32: LNA
- 33: mixer
- 34: IF unit
- 35: AD conversion unit
- 40: storage unit
- 60: cover member
- 62: cover bottom surface portion
- 64: spacer
- 66: support
- 68: support plate
- 100: mobility device
- 200: object

## Claims

1. An electronic device comprising:
a first sensor; and
a second sensor,
each of the first sensor and the second sensor comprising:
a transmission antenna configured to transmit a transmission wave;
a reception antenna configured to receive a reflected wave that is the transmission wave having been reflected; and
a controller configured to detect an object that reflects the transmission wave, based on a transmission signal transmitted as the transmission wave and a reception signal received as the reflected wave, wherein
the first sensor and the second sensor are disposed in respective directions that are not parallel to each other.

2. The electronic device according to claim 1, wherein the first sensor and the second sensor are disposed in respective directions that form a predetermined angle with respect to each other.

3. The electronic device according to claim 1 or 2, wherein the first sensor is disposed on a first inclined surface, and the second sensor is disposed on a second inclined surface different from the first inclined surface.

4. The electronic device according to any of claims 1 to 3, wherein a surface on which the first sensor is disposed and a surface on which the second sensor is disposed form two inclined surfaces having a common ridgeline.

5. The electronic device according to any of claims 1 to 4, wherein the first sensor and the second sensor are disposed in proximity to each other.

6. The electronic device according to any of claims 1 to 5, wherein an angle at which the object is detectable by the first sensor and the second sensor is greater than 180°.

7. The electronic device according to any of claims 1 to 6, wherein each of a surface on which the first sensor is disposed and a surface on which the second sensor is disposed is covered with a cover member that is parallel to the surface.

8. The electronic device according to any of claims 1 to 7, wherein the first sensor and the second sensor are electrically connected to each other.

9. The electronic device according to any of claims 1 to 8, wherein the first sensor is configured to control transmission of a transmission wave performed by the second sensor.

10. The electronic device according to claim 9, wherein the first sensor is configured to control a transmission timing of a transmission wave transmitted by the second sensor.

11. The electronic device according to claim 9, wherein the first sensor is configured to perform control for making a frequency of a transmission wave transmitted by the first sensor and a frequency of a transmission wave transmitted by the second sensor different from each other.

12. A method for controlling an electronic device including a first sensor and a second sensor disposed in respective directions that are not parallel to each other, the method comprising:
at each of the first sensor and the second sensor,
transmitting a transmission wave with a transmission antenna;
receiving a reflected wave that is the transmission wave having been reflected, with a reception antenna; and
detecting an object that reflects the transmission wave, based on a transmission signal transmitted as the transmission wave and a reception signal received as the reflected wave.

13. A program causing an electronic device including a first sensor and a second sensor disposed in respective directions that are not parallel to each other to:
at each of the first sensor and the second sensor,
transmit a transmission wave with a transmission antenna;
receive a reflected wave that is the transmission wave having been reflected, with a reception antenna; and
detect an object that reflects the transmission wave, based on a transmission signal transmitted as the transmission wave and a reception signal received as the reflected wave.
